POOR QUALITY

(19) Europäisches Patentamt
European Patent Office
Office européen des brevets

(11) Numéro de publication: 0 133 090
B1

(12) **FASCICULE DE BREVET EUROPÉEN**

(45) Date de publication du fascicule du brevet: 13.01.88

(21) Numéro de dépôt: 84401465.4

(22) Date de dépôt: 10.07.84

(51) Int. Cl.⁴: B 32 B 17/10, C 08 J 5/18, C 08 G 18/66, C 08 G 18/78, C 08 G 18/75

(54) **Feuille en matière plastique transparente de haute qualité optique.**

(30) Priorité: 11.07.83 FR 8311506

(43) Date de publication de la demande: 13.02.85 Bulletin 85/7

(45) Mention de la délivrance du brevet: 13.01.88 Bulletin 88/2

(84) Etats contractants désignés: AT BE CH DE FR GB IT LI LU NL SE

(56) Documents cité:
EP-A-0 054 491
DE-A-3 135 672
FR-A-2 385 751
FR-A-2 398 606
FR-A-2 442 128
GB-A-2 074 940
US-A-4 103 070

(73) Titulaire: SAINT- GOBAIN VITRAGE, Les Miroirs 18, avenue d'Alsace, F-92400 Courbevoie (FR)

(72) Inventeur: Bravet, Jean- Louis, 5 avenue du Moulin, F-60150 Thourotte (FR)
Inventeur: Colmon, Daniel, 6 rue du Colonel Fabien, F-60150 Thourotte (FR)
Inventeur: Daude, Gérard, 11, rue René Voisin, F-33140 Villeneuve d'Oron (FR)
Inventeur: Moncheaux, Michel- Jean, 9 rue des Sablons, F-60200 Compiègne (FR)

(74) Mandataire: Muller, René, SAINT- GOBAIN RECHERCHE 39, quai Lucien Lefranc, F-93304 Aubervilliers (FR)

EP 0 133 090 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1988

## Description

L'invention concerne une feuille en matière plastique transparente de haute qualité optique qui peut être utilisée seule ou en association avec d'autres matériaux et notamment dans la fabrication de vitrages feuilletés comprenant une feuille de verre et au moins une couche de matière plastique, par exemple des pare-brise de véhicule, comme il est revendiqué dans les publications EP-A- 131 523 et EP-A 132 198 déposées le même jour la demanderesse, la feuille de matière plastique présentant à la fois des propriétés d'absorbeur d'énergie et des propriétés de résistance à la rayure et à l'abrasion.

Des feuilles de matière plastique pouvant être utilisées dans des vitrages feuilletés du type décrit précédemment ont déjà été proposées. Ainsi dans la publication de brevet français 2 398 606, on décrit une feuille présentant deux couches, à savoir une couche d'une matière thermoplastique qui dans l'application aux vitrages feuilletés comprenant une seule feuille de verre, est une couche intercalaire présentant des propriétés d'absorbeur d'énergie, et une couche de matière thermodurcissable présentant des propriétés d'antilacération et d'autocicatrisation.

La couche intercalaire ayant des propriétés d'absorbeur d'énergie est un polyuréthane thermoplastique obtenu à partir d'au moins un diisocyanate aliphatique et d'au moins un polyesterdiol ou polyétherdiol, le rapport des groupements équivalents NCO eux groupements équivalents OH étant de préférence compris entre 0,8 et 0,9. Le vitrage utilisant une telle feuille à deux couches conserve ses bonnes propriétés optiques et l'adhésion reste bonne entre les éléments, dans des conditions de température et d'humidité très variables, mais les propriétés bio-mécaniques du vitrage et notamment la résistance aux chocs ne sont pas entièrement satisfaisantes.

On connait encore d'après la publication de brevet européen 0 054 491 une feuille à deux couches pouvant être utilisée pour la fabrication d'un vitrage feuilleté ayant la structure décrite précédemment, la couche remplissant la fonction de couche intercalaire ayant des propriétés d'absorbeur d'énergie étant à base d'une polyuréthanepolyurée présentant une structure linéaire et une teneur en groupe urée de l'ordre de 1 à 20 % en poids, ce polyuréthane-polyurée étant le produit réactionnel d'un prépolymère, issu d'un composant polyol et d'un composant isocyanate pris en excès, avec au moins une diamine. Cette couche intercalaire ayant des propriétés d'absorbeur d'énergie est fabriquée par extrusion d'une résine de polyuréthane-polyurée ou par coulée d'une solution de ladite résine et évaporation des solvants, ce qui dans un cas comme dans l'autre nécessite plusieurs opérations successives.

Dans le cas de l'extrusion, il est nécessaire d'effectuer une synthèse préalable de la résine pour pouvoir l'extruder.

En outre pour obtenir la qualité optique nécessaire à l'application envisagée, il faut "repasser" la feuille. Cette qualité optique obtenue ne se maintient d'ailleurs généralement pas dans le temps car la matière plastique garde en mémoire son procédé de fabrication et le qualité obtenue par le "repassage" s'amenuise evec le temps.

De plus, l'extrusion de la couche ayent des propriétés d'absorbeur d' énergie pose un problème d'assemblage avec la couche autocicatrisable.

Dans le cas de la coulée d'une solution, il est également nécessaire d'effectuer une synthèse préalable de la résine. Il faut ensuite dissoudre celle-ci dans un solvant puis couler la solution et évaporer le solvant de façon répétitive pour l'obtention d'une couche d'épaisseur compatible avec le caractère absorbeur d'énergie recherché. L'évaporation du solvant constitue en outre une source de nuisance.

L'invention propose donc une nouvelle feuille transparente de haute qualité optique apte à être utilisée seule ou en association avec d'autres matériaux et notamment dans la fabrication des vitrages feuilletés décrits précédemment, cette feuille comprenant une couche formée dans un processus en continu par coulée réactive, sur un support plan horizontal duquel elle est détachable, d'un mélange réactionnel d'un composant isocyanate et d'un composant à hydrogènes actifs notamment un comosant polyol, le composant isocyanate comprenant au moins un diisocyanate aliphatique, cycloaliphatique ou un prépolymère de diisocyanate, ce composant ayant une viscosité inférieure à environ 5 Pas à + 40°C, le composant polyol comprenant au moins un polyol long difonctionnel de masse moléculaire comprise entre 500 et 4000 et au moins un diol court en tant qu'agent d'allongement de chaine. Par coulée réactive on entend la coulée sous forme d'une couche ou d'un film d'un mélange liquide des composants à l'état de monomères ou de prépolymères, suivie d'une polymérisation de ce mélange par la chaleur. Cette coulée réactive qui fournit à la couche ses bonnes propriétés mécaniques et optiques sera décrite plus complètement dans la suite de la description.

Les proportions des composants du polyuréthane sont choisies pour obtenir un système stoechiométriquement équilibré, c'est-à-dire que le rapport des groupements équivalents NCO apportés par le composant diisocyanate aux groupements équivalents OH apportés par le composant polyol, c'est-à-dire le ou les polyols longs et le ou les diols courts est de l'ordre de 1. Lorsque le rapport NCO/OH est inférieur à 1, plus il décroît et plus les propriétés mécaniques recherchées pour l'application deviennent rapidement peu satisfaisantes. Lorsque tous les composants du polyuréthane sont difonctionnels, la limite inférieure de rapport NCO/OH pour

l'obtention de propriétés mécaniques satisfaisante se situe à 0,5 environ. Lorsqu'un des composants au moins est trifonctionnel cette limite inférieure peut être baissée jusqu'à 0,8 environ. Lorsque le rapport NCO/OH est supérieur à 1, plus il croît et plus certaines propriétés mécaniques de la couche obtenue par coulée réactive sont renforcées, par exemple la couche devient plus rigide, mais étant donné le coût plus élevé du composant isocyanate par rapport à celui du composant polyol, le choix de ces rapports NCO/OH sensiblement égal à 1 est un bon compromis entre les propriétés obtenues et le coût.

Les proportions entre le polyol long et le diol court peuvent varier en fonction des propriétés désirées et aussi du rapport des groupements équivalents, le nombre des groupements équivalents OH dus au diol court représentant de 20 à 70 % des groupements équivalents totaux du mélange formant le composant polyol. Lorsqu'on augmente la proportion du diol court on durcit la couche et on augmente généralement son module.

Les diisocyanates convenables utilisés dans le cadre de l'invention sont choisis notamment parmi les isocyanates difonctionnels aliphatiques suivants: hexaméthylènediisocyanate (HMDI), 2,2,4-triméthyll,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m-et p-tétraméthylxylylènediisocyanate (m- et p-TMXDI), trans-cyclohexane-1,4 diisocyanate (CHDI), 1,3 -(diisocyanatométhyl) cyclohexane (XDI hydrogéné).

On utilise de préférence de l'IPDI notamment pour des raisons de prix de revient.

Selon le premier aspect de l'invention, on utilise un composant isocyanate contenant des fonctions urées. Ces fonctions urées améliorent certaines propriét'es mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence du 3-isocyanatométhyl-3,5,5 triméthylcyclohexyldiisocyanate comportant des fonctions urées (IPDI et dérivés).

Les polyols longs convenables sont choisis parmi des polyéther diols ou des polyester diols de masse moléculaire 500 - 4000 ; les polyester diols étant les produits d'estérification d'un diacide tel que l'acide adipique, succinique, palmitique, azelaïque, sébacique, ophtalique, et d'un diol tel un éthylèneglycol, propanediol -1,3, butanediol - 1,4, hexanediol- 1,6, les polyétherdiols de formule générale $H [ O (CH_2)n] m OH$

avec n = 2 à 6; m tel que la masse moléculaire soit située dans l'intervalle 500 - 4000 ou les polyétherdiols de formule générale

$$H \left[ O\underset{}{C}H(CH_3) - CH_2 \right]_m OH$$

avec m tel que la masse moléculaire soit située également dans l'intervalle 500-4000. On peut encore utiliser des polycaprolactone-diols.

On utilise de préférence un polytétraméthylène glycol (n = 4) de masse moléculaire 1000.

Les agents d'allongement de chaines convenables sont des diols courts de masse moléculaire inférieure à environ 300 et de préférence inférieure à 150, tels que les: éthylèneglycol, propanediol-1,2, propanediol-1,3, butanediol-1,2,-1,3, -1,4, diméthyl-2,2 propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol- 2,4, éthyl- 2 hexanediol-1,3, triméthyl-2,2,4-pentanediol-1,3, diéthylèneglycol, triéthylèneglycol, tétraéthylèneglycol, butyne-2-diol-1,4,butènediol-1,4 et décynediol substitués et/ou éthérifiés, hydroquinone-bishydroxyéthyléther, bisphénol A éthérifiés par deux ou quatre groupes d'oxyde de propylène, acide diméthylolpropionique. En général plus le diol est court plus la couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Une des caractéristiques de la couche ayant des propriétés d'absorbeur d'énergie est qu'elle est obtenue par coulée réactive sur un support plan horizontal. Cette coulée réactive dont une forme a déjà été décrite par exemple dans la publication de brevet français 2 442 128 pour l'obtention d'une couche de polyuréthane thermodurcissable à partir d'un mélange de composants trifonctionnels fournit de façon surprenante selon l'invention dans le cas de composants départ difonctionnels une couche qui n'est pas entièrement thermoplastique lorsque le rapport des groupements NCO/OH est sensiblement égal à 1.

La coulée réactive implique une réaction ou polymérisation rapide pour que la couche soit formée en des temps compatibles avec une fabrication industrielle. Ceci nécessite une température élevée, de l'ordre de 100 à 140°C environ, température à laquelle des réactions secondaires de ramification se produisent créant par exemple des groupements allophanates et/ou biurets entre les chaines d'uréthane, telles que:

R-NH-CO-O-R'-O
OCN-R-NCO
R-NH-CO-O-R'-O

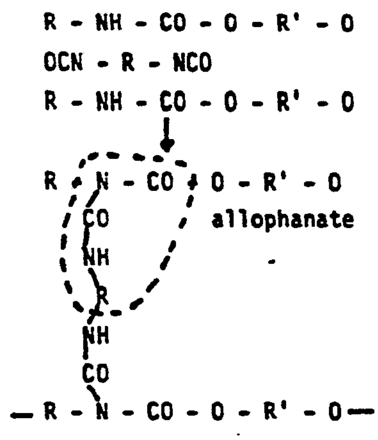


ou

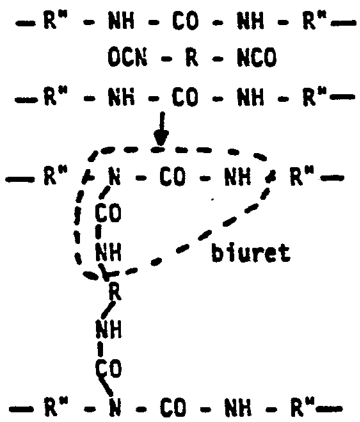


Dans ces conditions opératoires, mêmes avec des composants difonctionnels, lorsque le rapport NCO/OH est sensiblement égal à 1 comme indiqué précédemment, le produit obtenu n'est pas complètement thermoplastique; en effet, il est infusible et insoluble dans la plupart des solvants des polyuréthanes tel que le tétrahydrofurane, le diméthylformamide. Ceci ne présente pas d'inconvénient, car la couche est déjà formée; au contraire, on en tire comme avantage des propriétés mécaniques améliorées à formulation égale par rapport à un système équivalent polymérisé à basse température où seule une polycondensation linéaire se produit.

Lorsque le rapport NCO/OH est inférieur à 1 et de l'ordre de 0,8 à 0,9, une réticulation du type décrit ci-dessus ne se produit que de façon insignifiante.

Selon le deuxième aspect de la réalisation de la couche de polyuréthane ayant des propiétés d'absorbeur d'énergie, le composant polyol contient une fabile proportion d'au moins un polyol de fonctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 90 et 1000, les polyols mixtes polyéther/polyester de fonctionnalité supérieure à 2, par exemple de fonctionnalité comprise entre 2 et 3. L'ajout d'un polyol de fonctionnalité supérieure à 2 provoque des liaisons de pontage supplémentaires entre les chaines du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle le polyol long représente environ de 0,30 à 0,45 équivalent, le diol court d'environ 0,2 à 0,7 équivalent et le polyol de fonctionnalité supérieure à 2 environ 0 à 0,35 équivalent. Dans ces conditions, la couche présente les caractéristiques mécaniques suivantes, mesurées suivant les normes AFNOR/NFT 46 002, 51 034, 54 108.

- une contrainte au seuil d'écoulement $\sigma_y$ à -20°C inférieure ou égale à 3 daN/mm$^2$,
- une contrainte à la rupture $\sigma_R$ à + 40°C supérieure ou égale à 2 daN/mm$^2$,
- un allongement à la rupture $\varepsilon_R$ à + 20°C compris entre 250 et 500 %,
- une résistance à la déchirure amorcée Ra à + 20°C supérieure ou égale à 9 daN/mm d'épaisseur.

On peut encore réaliser la couche en remplaçant une partie du composant polyol par un produit à hydrogènes actifs différents tel une amine.

Suivant une réalisation de la couche de matière plastique selon l'invention, le composant isocyanate peut contenir dans des proportions limitées, par exemple inférieures, à environ 15 % en équivalent H NCO, au moins un triisocyanate tels un biuret d'isocyanate ou un triisocyanurate.

Sur un aspect de l'invention, la feuille est formée de la seule couche décrite précédemment. En effet, cette couche présente outre des propriétés d'absorbeur d'énergie, comme indiqués précédemment, des propriétés de résistance à la rayure et à l'abrasion la rendant apte à être utilisée comme couche externe. Ainsi, elle présente une résistance à la rayure supérieure à 20 grammes, valeur mesurée d'après le test décrit par la suite, une résistance à l'abrasion avec un écart de flou inférieur à 4 %, valeur mesurée d'après le test à l'abrasion décrit par le suite.

Pour remplir toutes les fonctions qui lui sont demandées, la couche selon l'invention doit présenter une épaisseur généralement supérieure à 0,4 mm et de préférence supérieure à 0,5 mm.

Dans une variante, la feuille selon l'invention comprend en plus de la couche décrite précédemment, une couche de matière plastique autocicatrisable, c'est-à-dire résistant à la rayure et à l'abrasion.

La couche de recouvrement autocicatrisable résistante à la rayure en matière plastique, que

l'on peut encore désigner dans son l'application selon l'invention par couche de protection interne (couche P I), est par exemple celle décrite dans les publications de brevets françaises 2 187 719 et 2 251 608. Cette couche autocicatrisable a dans les conditions normales de température, une haute capacité de déformation élastique, un faible module d'élasticité, inférieur à 2000 daN/cm$^2$ et de préférence inférieur à 200 daN/cm$^2$, et un allongement à la rupture de plus de 60 % avec moins de 2 % de déformation plastique et de préférence un allongement à la rupture de plus de 100 avec moins de 1 % de déformation plastique. Les couches préférées de ce type sont des polyuréthanes thermodurcissables ayant un module d'élasticité d'environ 25 à 200 daN/cm$^2$ et un allongement d'environ 100 à 200 % avec moins de 1 % de déformation plastique.

Des exemples de monomères qui conviennent pour la préparation de ces polyuréthanes thermodurcissables sont d'une part les isocyanates difonctionnels aliphatiques comme le 1,6-hexanediosocyanate, le 2,2,4-triméthyl-1,6-hexanediisocyanate, le 2,4,4-triméthyl-1,6-hexanediisocyanate, le 1,3-bis (isocyanatométhyl)benzène, le bis (4-isocyanatocyclohexyl)méthane, le bis (3-méthyl-4-isocyanatocyclohexyl) méthane, le 2,2-bis(4-isocyanatocyclohexyl)propane et le 3-isocyanato-méthyl-3,5,5-triméthylcyclohexylisocyanate, ainsi que les biurets, isocyanurates et prépolymères de ces composés ayant une fonctionnalité de 3 ou davantage et d'autre part les polyols polyfonctionnels, comme les polyols ramifiés tels que les polyesterpolyols et polyétherpolyols obtenus - par réaction d'alcools polyfonctionnels, notamment le 1,2,3-propanetriol (glycérol), le 2,2-bis (hydroxyméthyl)-1-propanol (triméthyloléthane), le 2,2-bis (hydroxyméthyl)-1-butanol (triméthylolpropane), le 1,2,4,-butane-triol, le 1,2,6-hexane-triol, le 2,2-bis (hydroxyméthyl)-1,3-propane-diol (pentaérythritol) et le 1,2,3,4,5,6-hexane-hexol (sorbitol),

avac des diacides aliphatiques comme l'acide malonique, l'acide succinique, l'acide glutarique, l'acide adipique, l'acide subérique et l'acide sébacique ou avec des éthers cycliques, come l'oxyde d'éthylène, l'oxyde de 1,2-propylène et le tétrahydrofurane.

Le poids moléculaire des polyols ramifiés est avantageusement d'environ 250 à 4000 et de préférence d'environ 450 à 2000. Des mélanges de différents polyisocyanates et polyols monomères peuvent être utilisés. Un polyuréthane thermodurcissable particulièrement préféré est celui décrit dans la publication de brevet française 2 251 608.

Le choix de l'épaisseur de la couche ayant des propriétés d'absorbeur d'énergie (couche A E) et de celle de la couche autocicatrisable (couche P I) et le rapport entre ces deux épaisseurs sont des facteurs importants. Selon l'invention, l'épaisseur totale des deux couches superposées est supérieure à 0,5 mm avec une épaisseur d'au moins 0,4 mm pour la couche ayant des propriétés d'absorbeur d'énergie.

En outre, l'adhésion entre cette couche et la feuille de verre doit être supérieure à environ 2 daN/5 cm, valeur mesurée au test de pelage comme décrit par la suite. Catte force d'adhésion ne devant cependant pas être trop élevée surtout lorsqu'on utilise une couche A E d'épaisseur relativement faible, proche de la limite inférieure convenable d'environ 0,4 mm.

La couche ayant des propriétés d'absorbeur d'énergie peut contenir divers additifs qui servent généralement à faciliter sa fabrication par coulée réactive, ou qui peuvent améliorer encore ces baisses de ses propriétés.

Elle peut contenir un catalyseur tel un catalyseur d'étain par exemple le dibutyldilaurate d'étain, l'oxyde de tributylétain, l'octoate d'étain, un catalyseur organomercurique par exemple l'ester phenyl mercurique, un catalyseur amine par exemple le diazabicyclo-(2,2,2)-octane, le 1,8diazabicyclo (5,4,0)-1 decene-7.

La couche peut contenir un stabilisant tel le bis (2,2,6,6-tétraméthyl-4 piperidyl) sebaçate, un antioxydant phénolique.

La couche peut contenir également un agent nappant tel une résine silicone, un ester fluoroalkylé, une résine acrylique.

Pour fabriquer la feuille de la variante à deux couches on peut opérer da la façon suivante:

On fabrique tout d'abord une première couche qui peut être soit le couche adhésive ayant des propriétés d'absorbeur d'énergie (couche A E), soit la couche de matière plastique autocicatrisable de protection interne (couche P I) formée notamment d'un polyuréthane thermodurcissable. Et sur cette première couche, on forme la deuxième couche.

On peut ainsi fabriquer tout d'abord une couche de polyuréthane thermodurcissable par coulée du mélange des composants sur un support de coulée. Après polymérisation des monomères et formation d'une couche thermodurcissabla d'épaisseur pouvant varier entre 0,1 et 0,8 mm, on coule le mélange réactionnel des composants de la couche ayant des propriétés d'absorbeur d'énergie.

On peut encore procéder d'une façon inverse, c'est-à-dire en formant d'abord la couche ayant des propriétés d'absorbeur d'énergie (couche A E).

Pour fabriquer le vitrage feuilleté qui utilise la feuille à une ou deux couches selon l'invention, on en assemble les éléments par utilisation de le pression, par exemple par pinçage entre les roulaaux d'une calandreuse, et par action de la chaleur.

Il est possible d'améliorer la liaison des éléments ultérieurement en soumettant le vitrage feuilleté à un cycle d'autoclave, par exemple une heure à une température d'environ 100 à 140° C et sous une pression d'environ 3 à 15 bars, ou par un cycle d'étuvage.

Des exemplas de fabrication de la feuille selon

l'invention et des vitrages feuilletés l'utilisant sont décrits par la suite.

**EXEMPLE 1**

Sur un support en verre mobile défilant de manière continue, revêtu d'un agent de séparation qui peut être par exemple celui décrit dans la publication de brevet français 2 383 000, à savoir un produit d'addition modifié d'éthylène oxyde, on coule un mélange homogène avec les proportions suivantes de:

- 1000 g d'un polyéther d'un poids moléculaire d'environ 450 obtenu par condensation d'oxyde de 1,2-propylène avec du 2,2-bis (hydroxyméthyl)- 1-butanol et ayant une tèneur en radicaux hydroxyles libres d'environ 10,5 à 12 %, contenant 1 % en poids d'un stabilisant, 0,05 % en poids d'un catalyseur à savoir du dilaurate de dibutylétain et 0,1 % en poids d'un agent nappant,
- 1020 g d'un biuret de 1,6-hexenediisocyanate ayant une teneur en radicaux isocyanates libres d'environ 23,2 %.

On utilise une tête de coulée telle que celle décrite dans la publication de brevet français 2 347 170. On forme une couche uniforme qui après polymérisation sous l'effet de la chaleur, par exemple environ 15 minutes à 120° C, présente une épaisseur d'environ 0,19 mm et des propriétés d'autocicatrisation.

Pour fabriquer la couche ayant des propriétés d'absorbeur d'énergie, on prépare au préalable le composant polyol en mélangeant un polytétraméthylèneglycol de masse moléculaire 1000 (par exemple le produit commercialisé sous l'appellation Polymeg 1000 (marque déposée) par la société QUAKER OATS), avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,02 % en poids calculé de la même façon que précédemment.

Le composant isocyanate utilisé est du 3-isocyanatométhyl-3,5,5 triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1.

Après dégazage sous vide des composants, le mélange porté à environ 40° C est coulé à l'aide d'une tête de coulée comme celle décrite dans la publication de brevet français 2 347 170, sur la couche de polyuréthane autocicatrisable formée précédemment. On forme ainsi une couche d'environ 0,53 mm d'épaisseur qui est soumis à un cycle de polymérisation consistant en 25 minutes de chauffage à 120° C environ.

La feuille à deux couches est retirée du support en verre et elle peut être manipulée aisément, stockée ou utilisée juste après pour la fabrication des vitrages feuilletés selon l'invention.

Pour fabriquer le vitrage on assemble la feuille à deux couches obtenue précédemment avec une feuille en verre recuit de 2,6 mm d'épaisseur. Le verre peut éventuellement être durci ou trempé. L'assemblage comme mentionné auparavant peut s'effectuer en deux étapes, une première étape consistant en un assemblage préliminaire obtenu par passage des éléments constitutifs du vitrage entre deux rouleaux d'une calandreuse; à cette fin, on peut utiliser par exemple, le dispositif décrit dans la publication du brevet européen 0 015 209, la couche AE étant appliquée contre la face interne du verre et une seconde étape consistant en une mise du produit feuilleté obtenu dans un autoclave où pendant une heure environ il subit une pression d'environ 10 bars à une température d'environ 135° C. Ce cycle d'autoclave peut être éventuellement remplacé par un cycle d'étuvage sans pression.

Le vitrage obtenu présente une excellente qualité optique et une transparence parfaite.

L'adhérence obtenue entre la feuille de verre et la couche ayant des propriétés d'absorbeur d'énergie est mesurée sur le vitrage fabriqué par un test de pelage décrit ci-dessous.

On découpe une bande de 5 cm de large de la feuille de recouvrement à deux couches. On décolle l'extrémité de la bande sur laquelle on effectue une traction perpendiculaire à la surface de vitrage, avec une vitesse de traction de 5 cm par minute. L'opération est réalisée à 20° C. On nota la force de traction moyenne nécessaire au décollement de la bande. En opérant ainsi, on obtient une force de traction de 10 daN/5 cm.

Des essais de résistance au choc à différentes températures sont réalisés sur le vitrage fabriqué selon l'exemple.

Le premier essai de résistance au choc est effectué avec une bille d'acier d'un poids de 2,260 kg (test de la grosse bille) que l'on fait tomber sur la partie centrale d'un échantillon de vitrage feuilleté de 30,5 cm de côté, maintenu sur un cadre rigide. On détermine la hauteur approximative pour laquelle 90 % des échantillons testés à la température choisie résistent à la chute de bille sans être traversés.

Pour le vitrage feuilleté selon l'exemple la valeur obtenue est de 8 mètres.

Un autre essai de résistance au choc est effectué avec une bille d'acier de 0,227 kg et de 38 mm de miamètre. Un essai est réalisé à une température de - 20° C, un autre est réalisé à une tampérature de + 40° C. Les valeurs obtenues sont respectivement de 11 et de 13 mètres.

Compte-tenu de la norme européenne R 43 en vigueur, les résultats recherchés sont d'au moins 4 mètres à la grosse bille, d'au moins 8,5 métres à

la petite bille à - 20°C et d'au moins 9 mètres à la petite bille à + 40°C.

Par ailleurs, la couche PI montre des propriétés de surface suffisantes pour une utilisation dans un vitrage feuilleté et notamment une résistance à la rayure et à l'abrasion mesurées comme décrit ci-après:

On mesure la résistance à la rayure par le test à la rayure connu sous l'appellation de "MAR résistant test" et qui est pratiqué avec l'appareil ERICHSEN, type 413. On mesure la charge à porter sur une tête diamantée pour introduire une rayure persistante sur la couche de matière plastique assemblée au support en verre. La charge doit être supérieure ou égale à 20 grammes pour que la couche de matière plastique ait la propriété d'être autocicatrisable.

On mesure la résistance à l'abrasion selon la norme européenne R43. A cet effet, on fait subir à un échantillon assemblé du vitrage une abrasion à l'aide d'une meule abrasive. Après 100 tours d'abrasion, on mesure avec un spectrophotomètre l'écart de flou entre la partie abrasée et la partie non abrasée. L'écart de flou (Δ flou) doit être inférieur à 4 % pour que la couche ait la qualité anti-abrasive.

Le vitrage selon l'exemple présente toutes les caractéristiques le rendant apte à l'utilisation en tant que pare-brise de véhicule.

**EXEMPLE TEMOIN**

On opére de la même façon que dans l'example 1 avec les mêmes composants de départ et les mêmes proportions, pour la fabrication de la couche A E sauf que cette couche n'est pas obtenue par coulée réactive mais par plusieurs coliées successives d'une solution de polyuréthane préparée par synthèse an solution, en vue d'obtenir une épaisseur de 0,53 mm.

Le test de pelage fournit une valeur de 8 daN/5cm.

Das essais de résistance au choc réalisés dans les mêmes conditions que dans l'exemple 1 fournissent les valeurs suivantes:

- 3,5 mètres à la grosse bille, 4 mètres et 3 mètres à la petite bille aux températures respectives de - 20°C at + 40°C.

Ces valeurs sont insuffisantes ce qui montre que la coulée réactive utilisée dans l'exemple 1 donne à la couche, A E les propriétés recherchées.

**EXEMPLE 2**

On opère de la même façon que dans l'exemple 1, sauf que l'on fabrique des couches avec des épaisseurs différentes, à savoir une couche autocicatrisable (P I) de 0,41 mm d'épaisseur et une couche A E de 0,29 mm d'épaisseur.

Le vitrage feuilleté obtenu présente les caractéristiques suivantes:

Le test de pelage fournit une valeur de 10 daN/5 cm. Le test de la grosse bille et les deux essais à la petite bille donnent des valeurs respectives de 3,5, 9 et 9 mètres ce qui est insuffisant. Ces mauvaises valeurs sont dues à l'épaisseur insuffisante de la couche ayant des propriétés d'absorbeur d'énergie.

**EXEMPLE 3**

On opère de la même façon que dans l'exemple 1, sauf que l'on fabrique une couche P I de 0,315 mm d'épaisseur et une couche A E de 0,415 mm d'épaisseur.

Le test de pelage fournit une valeur de 10 daN/5 cm. Les tests à la grosse bille at à la petite bille fournissent des valeurs respectivas de 4,5, 10 et 13 mètres ce qui est tout à fait satisfaisant.

**EXEMPLE 4**

On opère de la même façon que dans l'exemple 1 sauf que l'on fabrique une couche P I de 0,32 mm d'épaisseur et une couche A E da 0,42 mm d'épaisseur et que l'on fait subir à la surface du verre avant assemblage, un traitement classique par des promoteurs d'adhésion tels des silanes pour obtenir une valeur d'adhésion plus élevée.

Le test de pelage fournit une valeur supérieure à 20 daN/5 cm.

Le test à la grosse bille fournit une valeur de 3,5 mètres.

Cette valeur insuffisante pour la résistance au choc est due à l'adhésion trop forte de la couche AE avec le varre dans le cas où cette couche présente une épaisseur relativement peu élevée. Cet exemple est à comparer à l'exemple 3 qui, malgré l'utilisation de couches de mêmes épaisseurs, fournit un vitrage satisfaisant grâce à une force d'adhésion plus faible.

**EXEMPLE 5**

On opère de la même façon que dans l'exemple 1, sauf que l'on fabrique une couche P I de 0,46 mm d'épaisseur et une couche A E de 0,56 mm d'épaisseur et que l'on traite le verre avant assemblage comme dans l'exemple 4.

Le test de pelage fournit une valaur de 20 daN/5 cm alors que les tests à la grosse et petite bille fournissent des valeurs respectives de 8, 11,5 et 13 mètres.

Cet exemple est à comparer à l'example 4. Il montre que malgré une forte adhésion, l'emploi d'une couche A E de forte épaisseur fournit des

valeurs de résistance mécanique satisfaisantes.

**EXEMPLE 6**

On opère de la même façon que dans l'exemple 1 sauf que le composant polyol de départ pour la couche A E est formé d'un mélange de polytétraméthylèneglycol de masse moléculaire 1000, de butanediol-1,4 et de polycaprolactonetriol (par exemple le produit commercialisé sous l'appellation Niax 301 (marque déposée) par la société UNION CARBIDE), dans des proportions respectives telles que pour un équivalent d'hydroxyle on utilise 0,35, 0,55 et 0,10 équivalent de chacun des polyols.

On fabrique des couches de 0,160 mm d'épaisseur pour la couche P I et de 0,660 mm d'épaisseur pour la couche A E.

Le vitrage obtenu présente des caractéristiques optiques et mécaniques tout à fait satisfaisantes. Les valeurs mesurées aux différents tests sont les suivantes: une adhésion de 3 daN/5 cm, des valeurs aux tests de billes de 9, 13 et 13 mètres.

**EXEMPLES 7**

On opère de la même façon que dans l'exemple 6 sauf que les proportions des différents polyols sont respectivement de 0,35 équivalent OH pour le polymeg 1000, 0,45 équivalent OH pour le butanediol-1,4, et 0,20 équivalent OH pour le Niax 301.

On fabrique des couches de 0,31 mm d'épaisseur pour la couche P I et de 0,48 mm d'épaisseur pour la couche A E.

Les valeurs mesurées aux tests sont les suivantes: une adhésion de 3 daN/5 cm, des valeurs de 4, 5, 10 et 12 mètres aux billes, ce qui est satisfaisant.

**EXEMPLE 8**

On opère de la même façon que dans l'exemple 7 sauf que l'on utilise des épaisseurs de 0,39 mm pour la couche P I et de 0,39 mm pour la couche A E.

Les valeurs mesurées sont les suivantes: une adhésion de 4, des valeurs de 3, 8 et 8 pour les billes, ce qui est insuffisant.

Cet exemple comparé à l'exemple 7 montre que pour une même épaisseur pour la feuille à 2 couches, il existe un rapport d'épaisseur entre la couche A E et la couche P I qui, selon la valeur, fournit un vitrage satisfaisant ou non.

Les exemples suivants sont relatifs à la variante de la feuille selon l'invention qui est constituée d'une couche unique et aux vitrages l'utilisant.

**EXEMPLE 9**

Pour fabriquer la couche de matière plastique, on prépare au préalable le composant polyol en mélangeant un polytétraméthylène glycol de masse moléculaire 1000 (par exemple le produit commercialisé sous l'appellation Polymeg 1000⊕ par la société QUAKER OATS, avec du butanediol-1,4, les proportions des deux constituants étant telles que le polytétraméthylèneglycol apporte 0,37 équivalent en groupes hydroxyles alors que le butanediol-1,4 en apporte 0,63.

Au composant polyol on incorpore un stabilisant à raison de 0,5 % en poids de la masse totale du composant polyol et du composant isocyanate, un agent nappant à raison de 0,05 % en poids calculé de la même façon et un catalyseur du dilaurate de dibutylétain à raison de 0,02 % en poids calculé de la même façon que précédemment.

Le composant isocyanate utilisé est du 3-isocyanatométhyl-3,5,5 triméthylcyclohexyldiisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCO/OH est de 1. Après dégazage sous vide des composants, le mélange porté à 40° C est coulé à l'aide d'une tête de coulée comme celle décrite dans la publication de brevet français 2 347 170, sur un support en verre mobile recouvert d'un agent de séparation. On forme ainsi une couche d'épaisseur homogène d'environ 0,755 mm d'épaisseur, que l'on soumet à un cycle de polymérisation, c'est-à-dire à une température de 120° C durant 25 minutes environ.

Après polymérisation, la couche est retirée du support en verre et forme une feuille qui peut être stockée ou utilisée juste après pour la fabrication des vitrages feuilletés.

Pour fabriquer le vitrage on assemble la feuille de matière plastique avec une feuille de 2,6 mm d'épaisseur en verre recuit. Le verre peut éventuellement être durci ou trempé. Cet assemblage peut s'effactuer en deux étape, comme décrit dans l'example 1.

Le vitrage obtenu présente une excellente qualité optique et une transparence parfaite.

L' adhérence obtenue entre la feuille de verre et la couche de polyuréthane est de 10 dN/5 cm.

Des essais de résistance au choc à différentes températures sont réalisés sur le vitrage fabriqué selon l'exemple.

Pour le vitrage feuilleté selon l'exemple la valeur obtenue au test de la grosse bille à + 20° C est de 12 mètres.

Les essais de résistance aux chocs effectués avec la petite bille donnent à - 20° C une valeur de 12 mètres et à + 40° C une valeur de 11 mètres.

La résistance à la rayure pour le vitrage selon l'exemple est de 32 grammes.

La couche selon l'exemple présente un écart de flou après abrasion de 0,94 %.

## EXEMPLE 10

On opère de la même façon que dans l'exemple 9 sauf que le composant polyol est formé d'un mélange de polytétraméthylène glycol de masse moléculaire 1000, de butanediol-1,4, et polycaprolactonetriol (par exemple le produit commercialisé sous l'appellation Niax 301®, par la société UNION CARBIDE) dans des proportions respectives telles que pour un équivalent d'hydroxyle au total, on utilise 0,35, 0,45 et 0,20 équivalent OH.

On fabrique une couche de 0,70 mm d'épaisseur. Le vitrage obtenu montre des caractéristiques mécaniques et optiques tout à fait satisfaisantes. Les valeurs mesurées aux différents tests sont les suivantes:

- une adhésion de 11 daN/5cm, des valeurs de 8 mètres à la grosse bille, 11 et 11 mètres respectivement à la petite bille à-20° C et + 40° C.
- une résistance à la rayure de 35 g et un écart de flou à l'abrasion de 1,2 %.

## EXEMPLE 11

On opère da la même façon que dans l'exemple 10 sauf que le composant polyol est constitué de 0,35 partie équivalent du polyol long, 0,55 partie du diol court at 0,10 partie du triol pour 1 équivalent de composant polyol.

On forme une couche de 0,66 mm d'épaisseur. Les valeurs mesurées aux différents tests sont les suivantes:

- une adhésion de 11 daN/5 cm, des valeurs de 10 à la grosse bille, 13,5 et 13,5 mètres à la petite bille à - 20° C et + 40° C respectivement, une résistance à la rayure de 25 g, et un écart de flou à l'abrasion de 1,2 %.

Bien que décrite essentiellement dans l'application à la fabrication des vitrages feuilletés, la feuille, selon l'invention, peut être utiliseé avec avantages dans d'autres applications, soit seule, soit en association avec d'autres matériaux transparents ou non.

## EXEMPLE 12

On opère de la même façon que dans l'exemple 1, sauf qu'on effectue la polymérisation de la couche à une température de 60° C seulement, durant 20 heures. Des essais de résistance aux chocs réalisés dans les mêmes conditions que dans l'exemple 1 donnent les valeurs suivantes:

- 6 mètres à la grosse bille, 6 mètres at 13,5 mètres à la petite bille aux températures respectives de -20° C et +40° C.

La valeur obtenue à la petite bille à -20° C est insuffisante. Cet exemple comparé à l'exemple 1 met en évidence l'influence de la température de polymérisation utilisée lors de la coulée réactive. Ici cette température est trop basse.

## Revendications

1. Feuille en matière plastique transparente de haute qualité optique comprenant une couche ayant des propriétés d'absorbeur d'énergie à base d'un polyuréthane, caractérisé en ce que la couche ayant des propriétés d'absorbeur d'énergie est formée essentiellement d'un polyuréthane obtenu par coulée réactive sur un support plan horizontal, d'un mélange réactionnel d'un composant isocyanate d'une viscosité inférieure à 5 Pas à + 40° C et d'un composant polyol, le composant isocyanate comprenant au moins un diisocyanate aliphatique ou cycloaliphatique ou un prépolymère d'isocyanate, le composant isocyanate contenant des fonctions urées, le taux d'urée pouvant atteindre 10 % du poids total du composant isocyanate, de préférence ce taux d'urée étant compris entre 5 et 7 %, le composant polyol comprenant au moins un polyol long difonctionnel de masse moléculaire comprise entre 500 et 4000 et au moins un diol court en tant qu'agent d'allongement de chaine, le rapport des groupements équivalents isocyanates aux groupements équivalents hydroxyles est environ égal à 1, les proportions entre les différents polyols sont choisies telles que le nombre de groupements hydroxyles équivalents dus au diol court représente de 20 à 70 % du total des groupements hydroxyles, cette couche présentant sous une épaisseur d'environ 0,5 mm une contrainte au seuil d'écoulement $\sigma y$ à - 20° C inférieure ou égale à 3 daN/mm$^2$, une contrainte à la rupture $\sigma R$ + 40° C supérieure ou égale à 2 daN/mm$^2$, un allongement à la rupture $\varepsilon R$ à + 20° C compris entre 250 et 400 %, une résistance à la déchirure amorcée $R_a$ à + 20° C supérieure ou égale à 9 daN/mm.

2. Feuille en matière plastique transparente de haute qualité optique comprenant une couche ayant des propriétés d'absorbeur d'énergie à base d'un polyuréthane, caractérisé en ce que la couche ayant des propriétés d'absorbeur d'énergie est formée essentiellement d'un polyuréthane obtenu par coulée réactive sur un support plan horizontal, d'un mélange réactionnel d'un composant isocyanate d'une viscosité inférieure à 5 Pas à + 40° C et d'un composant polyol, le composant isocyanate comprenant au moins un diisocyanate aliphatique ou cycloaliphatique ou un prépolymère d'isocyanate, le composant polyol comprenant au moins un polyol long difonctionnel de masse moléculaire comprise entre 500 et 4000, au moins un diol court en tant qu'agent d'allongement de chaine, au moins un polyol de fonctionnalité supérieure à 2, le rapport des groupements équivalents isocyanates aux groupements équivalents hydroxyles est environ égal à 1, les proportions entre les différents polyols sont

choisies telles que le nombre de groupements hydroxyles équivalents dus au diol court représente de 20 à 70 % du total des groupements hydroxyles, cette couche présentant sous une épaisseur d'environ 0,5 mm une contrainte au seuil d'écoulement $\sigma y$ à - 20° C inférieure ou égale à 3 daN/mm$^2$, une contrainte à la rupture $\sigma R$ + 40° C supérieure ou égale à 2 daN/mm$^2$, un allongement à la rupture $\varepsilon R$ à + 20° C compris entre 250 et 400 %, une résistance à la déchirure amorcée $R_a$ à + 20° C supérieure ou égale à 9 daN/mm.

3. Feuille selon une des revendications 1 à 2, caractérisée en ce que le composant isocyanate comprend du 3-isocyanatométhyl-3,5,5-triméthylcyclohexyllisocyanate.

4. Feuille selon une des revendications 1 à 3, caractérisée en ce que le composant isocyanate est formé essentiellement de 3-isocyanatométhyl- 3,5,5-triméthylcyclohexylisocyanate présentant des groupements urées et en ce que le composant polyol est formé essentiellement de polytétraméthylèneglycol de masse moléculaire d'environ 1000 et de butanediol - 1,4.

5. Feuille selon une des revendications 2 à 4, caractérisée en ce que le polyol de fonctionnalité supérieure à 2 est un triol.

6. Feuille selon une des revendications 1 à 5, caractérisée en ce que pour un équivalent d'hydroxyle au total pour le composant polyol de polyuréthane ayant des propriétés d'absorbeur d'énergie, le polyol long représente 0,30 à 0,45 équivalent, le diol court 0,2 à 0,7 équivalent et le polyol de fonctionnalité supérieure à 2 de 0 à 0,35 équivalent.

7. Feuille selon une des revendications 1 à 6, caractérisée en ce que la couche de polyuréthane ayant des propriétés d'absorbeur d'énergie comprend des additifs tel un catalyseur, un agent nappant, un stabilisant.

8. Feuille selon une des revendications 1 à 7, caractérisée en ce que l'adhésion entre la couche ayant des propriétés d'absorbeur d'énergie et la feuille de verre est supérieure à 2 daN/5 cm.

9. Feuille selon la revendication 8, caractérisée en ce que la couche de matière plastique ayant des propriétés d'absorbeur d'énergie a une résistance à la rayure supérieure à 20 g mesurée à l'appareil ERICHSEN type 413 et une résistance à l'abrasion selon la norme européenne R 4.3. telle que l'écart de flou soit inférieur à 4 %.

10. Feuille selon une des revendications 1 à 9, caractérisée en ce qu'elle comprend en outre une couche autocicatrisable à base d'un polyuréthane thermodurcissable.

11. Feuille selon la revendication 10, caractérisée en ce qu'elle présente une épaisseur d'au moins 0,5 mm, avec une épaisseur d'au moins 0,4 mm pour la couche ayant des propriétés d'absorbeur d'énergie.

12. Feuille selon une des revendications 1 à 11, caractérisé en ce que la couche de polyuréthane ayant des propriétés d'absorbeur d'énergie est obtenue par polymérisation à une température de polymérisation supérieure à 80° C lors de la coulée réactive.

13. Feuille selon une des revendications 1 à 12, caractérisé en ce que le composant isocyanate comprend en outre au moins un triisocyanate.

**Patentansprüche**

1. Scheibe aus transparentem Kunststoffmaterial mit hoher optischer Qualität mit einem energieabsorbierenden Überzug auf Polyurethanbasis,

dadurch gekennzeichnet,

daß der energieabsorbierende Überzug im wesentlichen aus Polyurethan besteht, das erhalten wurde durch einen auf einer ebenen, horizontalen Unterlage durchgeführten Reaktionsgießvorgang einer Reaktionsmischung aus einer Isocyanatkomponente mit einer Viskosität kleiner als 5 Pa.s bei 40° C und einer Polyolkomponente, wobei die Isocyanatkomponente ein aliphatisches oder cycloaliphatisches Diisocyanat oder eine Vorstufe eines Isocyanatpolymeren enthält, die Isocyanatkomponente Harnstofffunktionen aufweist, wobei der Anteil des Harnstoffes 10 %, vorzugsweise zwischen 5 und 7 % der Isocyanatkomponente ausmacht und die Polyolkomponente wenigstens ein langkettiges difunktionelles Polyol mit einem Molekulargewicht zwischen 500 und 4 000 und wenigstens ein kurzkettiges Diol als Agens zur Kettenverlängerung enthält, die Menge der äquivalenten Isocyanatgruppen zu den äquivalenten Hydroxylgruppen ungefähr gleich 1 ist, die Verhältnisse der verschiedenen Polyole untereinander so gewählt sind, daß die Anzahl der äquivalenten Hydroxylgruppen bei den kurzen Diolen 20 bis 70 % aller Hydroxylgruppen ausmacht, wobei der Überzug eine Dicke von ca. 0,5 mm, eine Fließschwellengrenze $\sigma_y \leq 3$ daN/mm$^2$ bei -20° C, eine Bruchgrenze $\sigma_R \geq 2$ daN/mm$^2$ bei +40° C, eine Bruchdehnung $\varepsilon_R$ zwischen 250 und 400 % bei +20° C und eine Weiterreißfestigkeit $R_a \geq 9$ daN/mm$^2$ bei +20° C aufweist.

2. Scheibe aus transparentem Kunststoffmaterial von hoher optischer Qualität mit einem energieabsorbierenden überzug auf polyurethanbasis,

dadurch gekennzeichnet,

daß der energieabsorbierende Überzug im wesentlichen aus Polyurethan besteht, das erhalten wurde durch einen auf einer ebenen horizontalen Unterlage durchgeführten Reaktionsgießvorgang einer Reaktionsmischung aus einer Isocyanatkomponente mit einer Viskosität unter 5 Pa.s bei +40° C und einer Polyolkomponente, wobei die Isocyanatkomponente ein aliphatisches oder cycloaliphatisches Diisocyanat oder eine Vorstufe eines Isocyanatpolymeren enthält und die Polyolkomponente wenigstens ein

langkettiges difunktionelles Polyol mit einem Molekulargewicht zwischen 500 und 4 000, wenigstens ein kurzkettiges Diol als Agens zur Kettenverlängerung, wenigstens ein Polyol, dessen Funktionalität über 2 liegt, wobei die Menge der äquivalenten Isocyanatgruppen zu den äquivalenten Hydroxylgruppen ungefähr gleich 1 ist, die Verhältnisse der verschiedenen Polyole untereinander so gewählt sind, daß die Anzahl der äquivalenten Hydroxylgruppen bei den kurzen Diolen 20 bis 70 % aller Hydroxylgruppen ausmachen und der Überzug eine Dicke von ungefähr 0,5 mm, eine Fließschwellengrenze $\sigma_y \leq 3$ daN/mm² bei -20° C, eine Bruchgrenze $\sigma \geq 2$ daN/mm² bei +40° C, eine Bruchdehnung $\varepsilon_R$ zwischen 250 und 400 % bei +20° C und eine Zerreißfestigkeit $R_a \geq 9$ daN/mm² bei +20° C aufweist.

3. Scheibe nach einem der Ansprüche 1 oder 2, dadurch gekennzeichnet, daß die Isocyanatkomponente 3-Isocyanat-methyl-3,5,5-trimethylcyclohexyl-isocyanat enthält.

4. Scheibe nach einem der Ansprüche 1 bis 3, dadurch gekennzeichnet, daß die Isocyanatkomponente im wesentlichen aus 3-Isocyanat-methyl-3,5,5-trimethylcyclohexylisocyanat mit Harnstoffgruppen und daß die Polyolkomponente in der Hauptsache aus Polytetramethylenglykol mit einem Molekulargewicht von etwa 1 000 und aus 1,4-Butandiol bestehen.

5. Scheibe nach einem der Ansprüche 2 bis 4, dadurch gekennzeichnet, daß das Polyol mit einer über 2 liegenden Funktionalität ein Triol ist.

6. Scheibe nach einem der Ansprüche 1 bis 5, dadruch gekennzechnet, daß für ein ganzes Hydroxyläquivalent für die Polyolkomponente aus Polyurethan mit energieabsorbierenden Eigenschaften das langkettige Polyol 0,30 bis 0,45 Äquivalente, das kurzkettige Polyol 0,2 bis 0,7 Äquivalente und das Polyol mit einer über 2 liegenden Funktionalität 0 bis 0,35 Äquivalente ausmachen.

7. Scheibe nach einem der Ansprüche 1 bis 6, dadurch gekennzeichnet daß der Polyurethanüberzug mit den energieabsorbierenden Eigenschaften Zusätze, wie einen Katalysator, ein Verlaufsmittel einen Stabilisator enthält.

8. Scheibe nach einem der Ansprüche 1 bis 7, dadurch gekennzeichnet, daß die Adhäsion zwischen der Scheibe mit den energieabsorbierenden Eigenschaften und dem Glas über 2 daN/5cm liegt.

9. Scheibe nach Anspruch 8, dadurch gekennzeichnet, daß der Kunststoffüberzug mit den energieabsorbierenden Eigenschaften einen Zugwiderstand, über 20 g, gemessen mit dem ERICHSEN-Gerät Typ 413, und eine Abriebfestigkeit gemäß der Europäischen Norm R 4.3. aufweist, sodaß die Trübungsabweichung unter 4 % liegt.

10. Scheibe nach einem der Ansprüche 1 bis 9, dadurch gekennzeichnet, daß sie außerdem einen selbstheilenden Überzug auf der Basis eines duroplastischen Polyurethans enthält.

11. Scheibe nach Anspruch 10, dadurch gekennzeichnet, daß sie eine Dicke von wenigstens 0, 5 mm mit einer Dicke von wengistens 0,4 mm für den Überzug mit den energieabsorbierenden Eigenschaften aufweist.

12. Scheibe nach einem der Ansprüche 1 bis 11, dadurch gekennzeichnet, daß der Polyurethanüberzug mit den energieabsorbierenden Eigenschaften durch Polymerisation bei einer Polymerisationstemperatur erhalten wird, die zur Zeit des Gießvorganges über 80° C liegt.

13. Scheibe nach einem der Ansprüche 1 bis 12, dadurch gekennzeichnet, daß die Isocyanatkomponente außerdem wenigstens ein Triisocyanat enthält.

## Claims

1. A sheet of transparent plastics material of high optical quality comprising a layer based on polyurethane having energy-absorbing properties, characterised in that the layer having energy-absorbing properties is formed essentially of a polyurethane obtained by reactive casting on a flat horizontal support of a reaction mixture of an isocyanate component of viscosity less than 5 Pas at 40° C and a polyol component, the isocyanate component comprising at least one aliphatic or cycloaliphatic di-isocyanate or an isocyanate prepolymer, the isocyanate component containing urea functions, the content of urea being up to 10% of the total weight of isocyanate component, the content of urea preferably being from 5 to 7 %, the polyol component comprising at least one long difunctional polyol of molecular weight from 500 to 4000 and at least one short diol as a chain lengthening agent, the ratio of isocyanate group equivalents to hydroxyl group equivalents is about 1, the proportions of the different polyols are selected such that the number of hydroxyl group equivalents due to the short polyol represents from 20 to 70 % of the total hydroxyl groups, and this layer having at a thickness of about 0.5 mm, a flow stress $\sigma_y$ at -20° C not exceeding 3 daN/mm², a rupture stress $\sigma_R$ at 40° C of at least 2 daN/mm², a lengthening at rupture $\varepsilon_R$ at +20° C from 250 to 400%, and a tear resistance Ra at +20° C of at least 9 daN/mm.

2. A sheet of transparent plastics material of high optical quality comprising a layer based on a polyurethane having energy-absorbing properties, characterised in that the intermediate layer based on polyurethane having energy-absorbing properties is formed essentially of a polyurethane obtained by reactive casting on a

flat horizontal support of a reaction mixture of an isocyanate component having a viscosity less than 5 Pas at 40° C and a polyol component, the isocyanate component comprising at least one aliphatic or cycloaliphatic di-isocyanate or an isocyanate prepolymer, the polyol component comprising at least one long difunctional polyol of molecular weight from 500 to 4000, at least one short diol as a chain lengthening agent, and at least one polyol of functionality greater than 2, the ratio of isocyanate group equivalents to hydroxyl equivalents is about 1, the proportions of the different polyols are chosen such that the number of hydroxyl group equivalents due to the short diol represents from 20 % to 70 % of the total of hydroxyl groups, this layer having at a thickness of about 0.5 mm a flow stress $\sigma_y$ at -20° C of not more than 3 daN/mm², a rupture stress $\sigma_R$- at +40° C of at least 2 daN/mm², a lengthening at rupture εR at +20° from 250 to 400 % and a tear resistance Ra at +20° C of at least 9 daN/mm.

3. A sheet according to claim 1 or 2, characterised in that the isocyanate component comprises 3-isocyanato-methyl-3,5,5-trimethylcyclohexylisocyanate.

4. A sheet according to one of claims 1 to 3, characterised in that the isocyanate component is formed essentially of 3-isocyanatomethyl-3,5,5-tri- methylcyclohexylisocyanate having urea groups and in that the polyol component is formed essentially of polytetramethyleneglycol of molecular weight about 1000 and 1,4-butanediol.

5. A sheet according to one of claims 2 to 4, characterised in that the polyol of functionality greater than 2 is a triol.

6. A sheet according to one of claims 1 to 5, characterised in that for one hydroxyl equivalent in total for the polyol component of the polyurethane having energy-absorbing properties, the long polyol represents 0.30 to 0.45 equivalent, the short diol 0.2 to 0.7 equivalent and the polyol of functionality greater than 2 0 to 0.35 equivalent.

7. A sheet according to one of claims 1 to 6, characterised in that the polyurethane layer having energy-absorbing properties comprises additives, such as a catalyst, a spreading agent and a stabiliser.

8. A sheet according to any one of claims 1 to 7, characterised in that the adhesion between the layer having energy-absorption properties and a glass sheet is greater than 2 daN/5 cm.

9. A sheet according to claim 8, characterised in that the layer of plastics material having energy-absorbing properties has a resistance to scratching greater than 20 g measured with an ERICHSEN type 413 apparatus and a resistance to abrasion according to European Standard R43 such that the haze difference is less than 4 %.

10. A sheet according to one of claims 1 to 9, characterised in that it further comprises a self-healing layer based on a thermosetting polyurethane.

11. A sheet according to claim 10, characterised in that it has a thickness of at least 0.5 mm, with a thickness of at least 0.4 mm for the layer having energy-absorbing properties.

12. A sheet according to any one of claims 1 to 11, characterised in that the polyurethane layer, having energy-absorbing properties is obtained by polymerisation at a polymerisation temperature greater than 80° C during reactive casting.

13. A sheet according to any one of claims 1 to 10, characterised in that the isocyanate component further comprises at least one tri-isocyanate.